# EUROPÄISCHE PATENTSCHRIFT

(11) **EP 2 141 059 B1**
(45) Veröffentlichungstag und Bekanntmachung des Hinweises auf die Patenterteilung: **07.12.2011**
(21) Anmeldenummer: 09163586.2
(22) Anmeldetag: 24.06.2009
(51) Int. Cl.: B62B 9/28

(54) **Stehbrett für Buggys, Kinder- und/oder Einkaufswagen**
Stand board for buggies, prams and/or shopping trolleys
Planche d'immobilisation pour poussettes-cannes, poussettes et/ou chariots de supermarché

(30) Priorität: 30.06.2008 DE 202008000081 U
(43) Veröffentlichungstag der Anmeldung: 06.01.2010
(73) Patentinhaber: Schandelmeier, Jürgen, 79241 Ihringen (DE)
(72) Erfinder: Schandelmeier, Jürgen, 79241 Ihringen (DE)
(74) Vertreter: Pröll, Jürgen

(56) Entgegenhaltungen:
- WO-A1-2007/030054
- WO-A1-2008/041041
- DE-T2-602004 007 547
- US-A- 5 882 022

## Beschreibung

Die Erfindung betrifft ein Stehbrett für Buggys, Kinder- und/oder Einkaufswagen mit den im Oberbegriff des Anspruchs 1 angegebenen Merkmalen.

Ein Stehbrett der gattungsgemäßen Art ist beispielsweise aus der WO 2008/041041 A1 bekannt. Das Stehbrett gemäß der DE 60 2004 007 547 T2 weist zum Anschluss an Buggys, Kinderwagen etc. Mittel zum Verbinden des Brettes mit dem Buggy oder Kinderwagen und zum Fahren auf dem Aufstellboden rückseitig Räder auf. Für die Ankopplung sind zwei Montagearme vorgesehen, welche diagonal nach vorne in Bewegungsrichtung des Stehbrettes gerichtet sind. Die Montagearme sind mit dem Brett verbunden und relativ zum Wagengestell hauptsächlich horizontal, senkrecht zur Fortbewegungsrichtung des Stehbrettes bewegbar gelagert.

In einer Ausführungsform bestehen die Montagearme aus wenigstens zwei Teilen, welche relativ zueinander in Längsrichtung verschiebbar sind, so dass unterschiedliche Längen realisierbar sind. An den freien Enden befindet sich jeweils eine Einrichtung, die zur Montage des Montagearmes an einer Befestigungseinrichtung im Buggy dient. Die Einrichtung ist senkrecht zur Längsrichtung des Montagearmes ausgeführt, so dass ein Verschwenken desselben in vertikaler Richtung um eine horizontale Schwenkachse ermöglicht wird. Um eine Anpassung an unterschiedliche Breiten des Buggys oder Kinderwagens vornehmen zu können, sind die Montagearme horizontal verschiebbar, zugleich aber auch im Winkel verstellbar am Brett vorderseitig angebracht. Dies bedingt eine besondere Auslegung, damit die Montagearme über die Länge der vorgesehenen Achsen verschoben werden können und die dynamischen Belastungskräfte beim Schieben eines Kinderwagens oder Buggys aufgefangen werden. Des Weiteren ist eine Anpassung nur an bestimmte Ausführungsformen und Halterungen an dem Wagengestell des Schiebewagens möglich, an dem das Stehbrett montiert werden soll.

Aus der WO 2007/030054 A1 ist ein Stehbrett für Kinderwagen mit einem Stützbrett mit Rädern bekannt, das eine Aufstellfläche aufweist und mit Befestigungsarmen an einem Kinderwagen montierbar ist, die in normaler Bewegungsrichtung des Stehbrettes herausragen. Zur Befestigung ist am Stehbrett eine Kante vor der Aufstellfläche vorgesehen. Die Befestigungsarme sind an der Kante mittels Befestigungsmittel montiert, die entlang der Kante verschiebbar sind. An den Befestigungsarmen befinden sich in Reihe angeordnete Bohrungen, in die ein Adapter zum Fixieren des Stehbrettes an einem Kinderwagen in verschiedene Positionen verstellt eingedrückt werden kann.

Ausgehend von dem angegebenen Stand der Technik liegt der vorliegenden Erfindung die Aufgabe zugrunde, das Stehbrett und dessen Befestigung an einem Buggy, Kinder- und/oder Einkaufswagen so auszubilden, dass es einfacher montierbar und universeller für die unterschiedlichsten Ausführungsformen der Wagengestelle verwendbar ist.

Die Aufgabe löst die Erfindung durch Ausbildung des Stehbrettes gemäß der im Anspruch 1 angegebenen technischen Lehre. Vorteilhafte Weiterbildungen der Erfindung sind in den Unteransprüchen im Einzelnen angegeben.

Nach der Lehre der Erfindung ist vorgesehen, dass jeder der beiden Befestigungsarme aus zwei Teilen besteht, wobei der erste Befestigungsarmteil um die horizontale Achse in verschiedene Winkel verstellbar angeordnet und der zweite Befestigungsarmteil am ersten quer zur Horizontalachse verschwenkbar und in den Schwenkstellungen feststellbar am ersten Befestigungsarmteil gelagert und mit dem freien Ende an dem Adapter fixiert ist, der an einem Rahmenteil des Wagengestells, z. B. einem Stützholm aus einem profilierten Aluminiumrohr, oder an einem Querholm, der zugleich die Lagerachse für die Hinterräder bildet oder zusätzlich hierzu zur Stabilisierung des Wagengestells vorgesehen ist, befestigt werden kann. Dabei können unterschiedliche Größen und Querschnittsformen der Holme vorhanden sein. In jedem Fall ist mit ein- und demselben Adapter eine Fixierung des Stehbrettes an den Rahmenteilen des Wagengestells möglich. Das Wagengestell kann dabei auch ein Einkaufswagen sein, der bekanntlich untenseitig einen Drahtkorb mit hinterem oberen Rand aufweist, an den die benötigten Adapter fixiert werden können.

Um eine Anpassung an die jeweilige Wagengröße auf einfache Weise vornehmen zu können, ist es lediglich erforderlich, die Arretierungen des Lagers des zweiten Befestigungsarmteils zu lösen, so dass der zweite Befestigungsarmteil in eine solche Lage verschwenkt werden kann, dass das hakenförmige Ende an dem zweiten Befestigungsarmteil in die Aufnahme des Adapters eingehängt werden kann.

In weiterer Ausgestaltung ist ferner vorgesehen, dass die zweiten Befestigungsarmteile auswechselbar sind, so dass kürzere gegen längere ausgetauscht werden können, was eine Anpassung an unterschiedliche Wagengrößen ermöglicht. Auch kann der zweite Befestigungsarmteil als Teleskoparmteil ausgeführt sein, um durch Ausziehen und ein Verrasten in den Ausstellpositionen eine Verlängerung zusätzlich zu ermöglichen.

An dem zweiten Befestigungsarmteil kann am freien Ende ein hakenförmiges Befestigungsmittel zur schwenkbeweglichen Fixierung an einem Lagerbolzen an dem Adapter vorgesehen sein. Mit diesem hakenförmigen Befestigungsmittel wird der Befestigungsarmteil an einem Querbolzen oder Bügel, der horizontal ausgerichtet am Adapter vorgesehen ist, eingehakt. Um eine Fixierung vornehmen zu können, kann auch eine Schiebesicherung vorgesehen sein, die den Querbolzen untenseitig durch Vorschieben untergreift, so dass der Haken unbeabsichtigt oder durch Rüttelbewegungen des Stehbrettes nicht ausrasten kann. Die Verwendung eines Bügels, z. B. in Form eines zu einem U-förmigen Bügels gebogenen Rundstahls, dessen Schenkel seitlich am Adapter fixiert sind, hat den Vorteil der losen, verschiebbaren Aufhängung ohne Seitenführung.

Von Vorteil ist eine Schiebesicherung, die als federbelasteter Schieberiegel ausgeführt ist, der durch die Kraft einer Feder die Einführöffnung des Hakens verdeckt. Zweckmäßigerweise sollte an dem Schieberiegel stirnseitig und/oder an dem Haken eine solche Einführschräge angeformt sein, dass der Bolzen beim Gegengreifen den Schieberiegel verdrängt und dieser nach dem Überlaufen des Bolzens die Einführöffnung wieder verschließt.

Um eine Anpassung an die Montagemöglichkeit an Rahmenteilen des Wagengestells auf einfache Weise zu ermöglichen, kann auch zwischen dem Adapter und dem Befestigungsarmteil ein Zwischenglied vorgesehen sein, das ein um die Längsachse drehbares Zwischenglied aufweist, so dass dann, wenn die bauliche Anordnung des Adapters dazu führt, dass der daran vorgesehene Lagerbolzen senkrecht verläuft, über das Zwischenglied mit dem daran befestigten Lagerbolzen eine Horizontalausrichtung des Lagerbolzens am Zwischenglied auf einfache Weise möglich ist. Der Befestigungsarmteil kann dann wiederum aufgehängt werden und ist um die horizontale Achsenebene verschenkbar.

Das Zwischenglied kann auch mit einem Hakenteil drehbar verbunden sein, und zwar um die Längsachse drehend, so dass das Hakenteil an den senkrecht ausgerichteten Querbolzen angehängt werden kann. Die Bedeutung des Zwischengliedes wird später anhand der Figuren noch ausführlich beschrieben.

An dem Adapter können aber auch mehrere Querbolzen, die jeweils in gesonderten Lagerschalen angebracht sind, vorgesehen sein. Die Lagerschalen können um 90° gegeneinander versetzt und relativ verdrehbar gelagert sein. Die Drehachse kann auch in Längsachsenrichtung zueinander verlaufend vorgesehen sein. Die entsprechend gabelförmigen Aufnahmen des zweiten Lagerteiles sind am ersten Lagerteil drehbar angenietet oder angeschraubt oder auf andere Art und Weise befestigt.

Der erste Befestigungsarmteil weist einen Lagerabschnitt auf, mit dem der Befestigungsarm für die Voreinstellung verschwenkbar an der Vorderseite des Stehbrettes ohne seitliche Verschiebungsmöglichkeit befestigt ist. Die Lagerausführung kann dabei vereinfacht ausgeführt sein, z. B. aus einer Sechskantlagerung bestehen, die ein Verrasten unter merklicher Kraftanwendung ermöglicht, die bei normaler Nutzung durch ein Kind nicht gegeben ist.

Nach der vorgenommenen Voreinstellung, die sich auch an den Höhenpositionierungen des Adapters am bzw. im Wagengestell orientiert, ist eine Breitenanpassung durch einfaches Verschwenken der zweiten Befestigungsarmteile möglich. Beide Adapter sind dabei auf gleicher Höhe oder nahezu gleicher Höhe im Wagengestell angeordnet. Beim Verschwenken kommen die quer zur Längsachse des Befestigungsarmes verlaufenden Haken in eine bestimmte Position. Jeder Adapter muss deshalb so positioniert sein, dass er in dieser Befestigungsposition als Träger für das hakenförmige Befestigungsmittel an dem Befestigungsarm dienen kann. Wird der Adapter beispielsweise an relativ senkrecht verlaufenden Stützen des Wagengestells montiert, so ist eine einfache Ausrichtung durch entsprechende Schrägestellung zur Längsachse des Wagengestells möglich. Die beiden Arme können dann beim Schieben des Wagens die unebenheitsbedingten Höhenverstellungen durch die Räder auf dem Boden durch Verschwenken ausgleichen. Die beiden Armteile werden nach der Ausrichtung der Befestigungsarme und deren Befestigung am Adapter fest miteinander verbunden, so dass ein Verschwenken der Befestigungsarme nur in vertikaler Richtung möglich ist. Die Fixierung kann durch Schrauben oder eingebaute Rastgesperre erfolgen, wobei im letzteren Fall eine rastende Winkelverstellung und im ersten Fall eine stufenlose Verstellung möglich ist.

Damit der Adapter an unterschiedliche Rahmenteile des Wagengestells befestigbar ist, weist er eine U-förmige Aufnahme zum Aufschieben auf ein Rahmenteil auf. Der Rahmenteil kann beispielsweise eine senkrechte Stütze, ein Querholm oder ein anderer Holm sein. Bei Anbringung an einen Querholm kann, je nach Ausführungsform des Schiebewagens, der Adapter so angebracht sein, dass, bezogen auf den Querholm, obenseitig eine Ankopplung eines Befestigungsarms oder aber auch untenseitig ermöglicht wird. Zu diesem Zweck ist der Querbolzen an dem Adapter, an dem das hakenförmige Verbindungsmittel des Befestigungsarmes angebracht werden kann, in einer Lagerkammer befestigt, die nach oben und in Richtung des Stehbrettes eine ausreichend große Lageröffnung bildet, so dass eine Einführung des hakenförmigen Verbindungsmittels beim Einhängen auch zwischen Wandteil und Lagerbolzen möglich ist. Der Abstand des Bolzens zur Unterseite der Kammer ist dabei so groß gewählt, dass der Haken auch von dieser Seite her einhängbar ist, so dass auch bei hängender Anordnung des Adapters, also hängend unterhalb eines Querholmes, eine Verbindung herstellbar ist.

Der Adapter weist zur leichteren Montage an den Rahmenteilen eine U-förmig Aufnahme auf, so dass er aufgeschoben werden kann. Der Boden dieser U-förmigen Aufnahme bildet zugleich die Trägerwand des gesamten Gebildes, an deren einen Seite sich die Aufnahme befindet und an deren anderen Seite sich die Lagerkammer oder Lagerkammern für den Querbolzen befinden. Bei einer Ausführung ist ein weiterer, z. B. verdrehbarer Gabelhalter mit einem Querbolzen senkrecht oder in einem bestimmten Winkel zur Lagerkammerlängsachse vorgesehen. Dieser Lagerhalter kann mittels eines Nietes oder einer Schraube an einer Lagerkammerwand oder am Querbolzen befestigt sein.

Die U-förmige Aufnahme weist ferner Vorrichtungen auf, um einen Spannkörper aufzunehmen, der nach dem Aufschieben auf ein Rahmenteil des Wagengestelles dahinter eingesetzt wird. Dieser Spannkörper sollte darüber hinaus rückseitig zugänglich eine Stellschraube aufweisen, an deren stirnseitigem Ende ein Spannklotz befestigt ist, der innerhalb der U-förmigen Aufnahme verschiebbar ist, so dass hierüber der Adapter fest an ein Rahmenteil angeschraubt werden kann. Um eine einfache Anpassung der U-förmigen Aufnahme an unterschiedliche Durchmesser oder Tiefenmaße z. B. bei ovalen Rahmenteilen vornehmen zu können, ist weiterhin vorgesehen, dass der Spannkörper innerhalb der U-förmigen Aufnahme in der Tiefe versetzt werden kann. Hierzu sind quer zur Längsrichtung an den Seitenwänden Rippen in einem definierten Rastermaß vorgesehen und ein korrespondierendes Rippenpaar oder mindestens eine Rippe an dem Spannkörper, so dass innerhalb der Reihe der Rippen ein Versetzen des Spannkörpers möglich ist. Die Rippen können auch T-förmige oder L-förmige Rippen sein, die so ineinander greifend ausgebildet sind, dass sie nur in senkrechter Schubrichtung ein- und wieder ausgeschoben werden können. Auch können Anschläge oder Rasten vorgesehen sein, die ein Durchschieben beim Einsetzen verhindern. Der Spannkörper wird also selbsttätig gehalten. Die L- oder T-förmigen Ausbildungen sind dabei so korrespondierend ausgebildet, dass sie ineinander greifen. Der Spannkörper kann die Aufnahme rückseitig überstehen, wenn die Befestigungsrippen im vorderen Bereich des Spannkörpers vorgesehen sind und die Tiefe bzw. der Durchmesser des Rahmenteils des Wagengestells so groß ist, dass anders ein Einklemmen nicht möglich ist.

Die Erfindung wird nachfolgend anhand der in den Zeichnungen dargestellten Ausführungsbeispiele ergänzend erläutert. In den Zeichnungen zeigen:
- Fig. 1: in perspektivischer Ansicht ein Stehbrett mit erfindungsgemäß ausgebildeten Befestigungsarmen,
- Fig. 2: das in Fig. 1 dargestellte Stehbrett mit einer Be- festigung des Adapters an den Stützen der Hinter- räder eines Buggys,
- Fig. 3: eine Anbindung der Adapter an einen Querholm, der sogleich die Achse einer Hinterradanordnung an ei- nem Kinderwagen bildet, und zwar untenseitig,
- Fig. 4: eine Ausführung gemäß Fig. 3 mit obenseitiger Anbindung an den Querholm,
- Fig. 5: in perspektivischer Explosionszeichnung einen Adapter nach der Erfindung und
- Fig. 6: ein weiteres Ausführungsbeispiel der Anbindung ei- nes Adapters an Hinterradstützen eines Buggys.

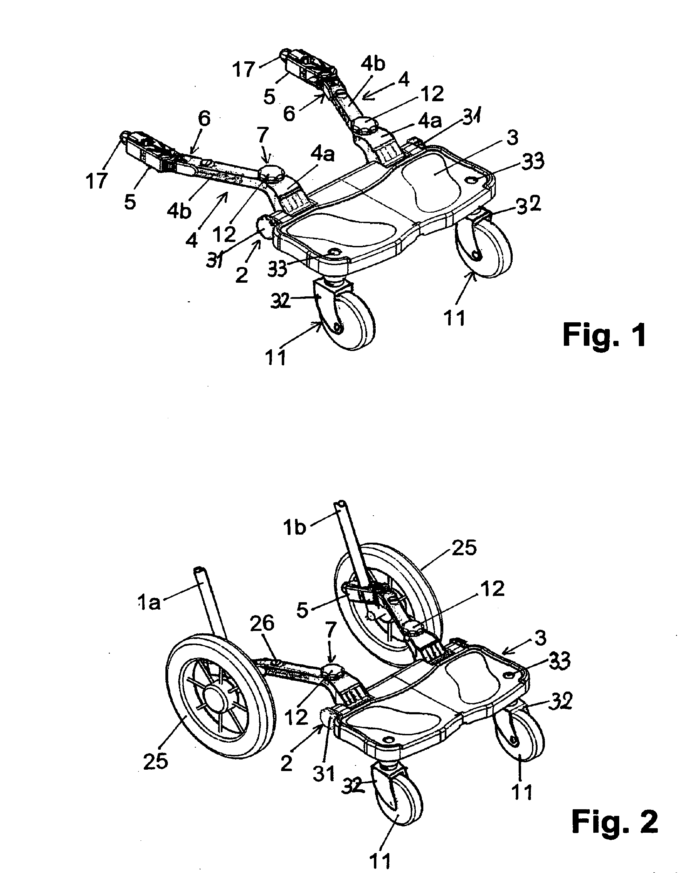

Fig. 1 zeigt in einer perspektivischen Darstellung ein Stehbrett nach der Erfindung. Dieses Stehbrett 3 weist rückseitig an der Unterseite vorstehend Gabelanordnungen 32 für Radanordnungen auf, die um eine vertikale Schwenkachse 33 drehbar gelagert sind. Zwischen den Gabelanordnungen 32 sind die hinteren Räder 11 gelagert. Die Gabelanordnung 32 ist so geformt, dass die Horizontalachse außerhalb der vertikalen Schwenkachse liegt, so dass ein Nachziehen der nachlaufenden, seitlich angeordneten Transportrollen bzw. Räder 11 z. B. bei Kurvenfahrten stets gegeben ist. An der Gabelanordnung 32 ist ferner ein Gehäuse anmontiert, in welchem sich eine Feder befindet, die sich innerhalb der Lagerung in dem Stehbrett 3 abstützt und zur Stoßdämpfung dient. Eine solche dämpfende Lagerung ist in der DE 203 06 242 U1 beschrieben und allgemein bekannt. Eine solche dämpfende Ausführung kann also auch beim erfindungsgemäßen Stehbrett zur Anwendung kommen.

An der dem Wagengestell zugewandten Seite des Stehbrettes sind zwei Horizontalachsen 2 seitlich vorgesehen, auf denen die ersten Teile 4a der Befestigungsarme 4 verschwenkbar angeordnet sind. Die Lagerung ist dabei so vorgesehen, dass die Teile bei entspannter Feststellschraube 31 im Winkel verstellt werden können, nach dem Festziehen der beiden seitlichen Feststellschrauben 31 jedoch in der entsprechenden Position verbleiben. Die Befestigungsarmteile 4a weisen einen unteren Abschnitt auf, der gegenüber dem oberen Abschnitt abgewinkelt ist, so das ein gestrecktes L mit dem zweiten Befestigungsarmteil 4b entsteht. Die beiden Befestigungsarmteile 4b sind schwenkbeweglich, und zwar um Achsen 7, die quer zu den Horizontalachsen 2 verlaufen, an dem oberen Abschnitt der abgewinkelten ersten Befestigungsarmteile 4a gelagert und können nach dem Lösen der Fixierschraube 12 seitlich verschwenkt werden. Nach Einpassung des Stehbrettes 3 in den hinteren Teil des Wagengestells und Einhängen der hakenförmigen Enden an den Befestigungsarmteilen 4b in die Adapter werden die Schrauben 12 wieder angezogen, so dass eine seitliche Auslenkung nicht mehr möglich ist.

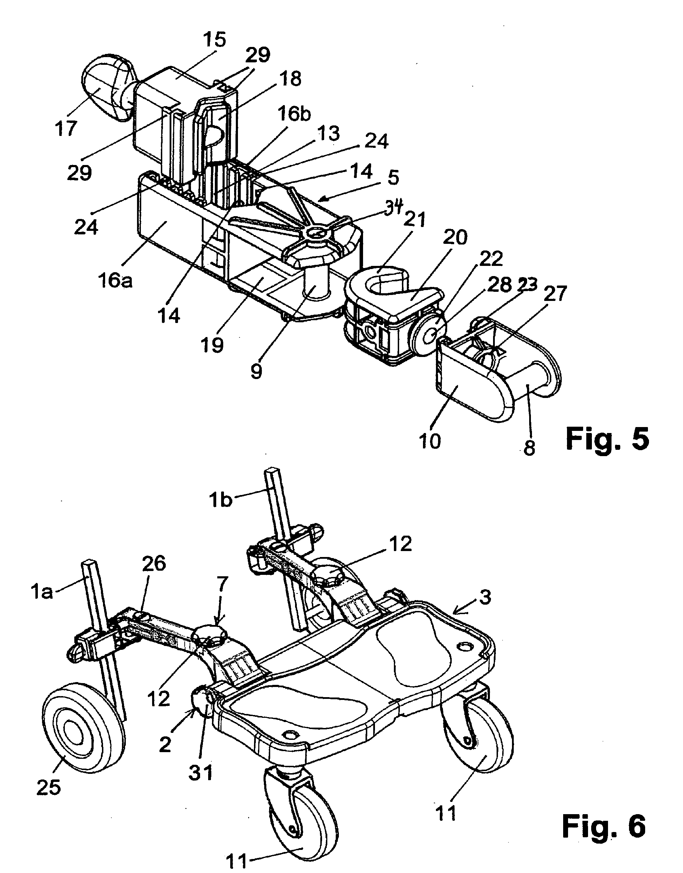

Die Abbildung zeigt ferner, dass die oberen Enden der zweiten Befestigungsarmteile 4b an gabelförmigen Lageraufnahmen am Adapter 5 befestigt sind, die auf einer horizontalen Achse 6 Querbolzen 8, 9 aufweisen. Auf diesen wird das jeweilige hakenförmige Ende an einem Befestigungsarmteil 4b aufgehakt. Zur Sicherung ist ein Schieber 26 vorgesehen, der mit einem Sicherungselement gekoppelt ist, das den Querbolzen 8, 9, auf den der hakenförmige Ansatz greift, untergreift, so dass eine Abzugssicherung während der Benutzung gegeben ist. Der Querbolzen 8 befindet sich beim Ausführungsbeispiel an einem Zwischenglied 10, das anhand der Fig. 5 später noch beschrieben wird.

Der Adapter 5 weist rückseitig eine Spannschraube 17 auf, deren Bedeutung ebenfalls anhand von Fig. 5 später erläutert wird. Im Übrigen ist der Adapter 5 so konzipiert, dass er wie aus Fig. 2 ersichtlich, z. B. an den nahezu senkrecht verlaufenden Stützholmen 1a, 1b eines Fahrgestells befestigt werden kann. Diese Stützholme 1a, 1b weisen an den unteren Enden Lager für die Aufnahmen der unteren hinteren Räder 25 auf. Fig. 2 zeigt auch, dass in Höhe der hinteren Räder 25 die Adapter 5 befestigt sind, und zwar in Längsrichtung des Fahrgestells verlaufend.

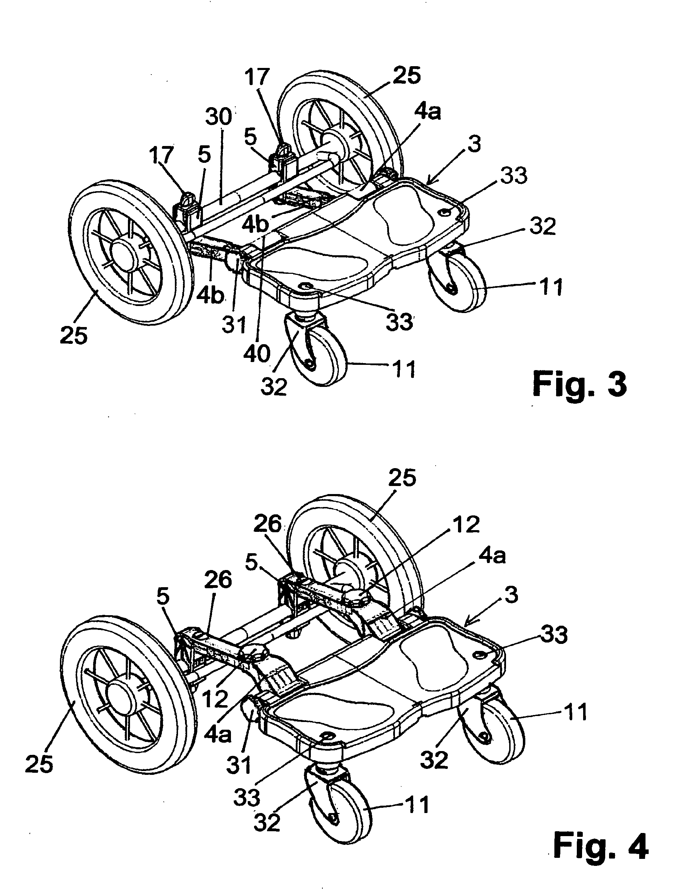

Fig. 3 zeigt eine Anbindungsvariante eines Stehbrettes nach der Erfindung an ein Kinderwagengestell. Das Kinderwagengestell weist nach Fig. 3 beispielsweise einen Querholm 30 auf, der zugleich die Verbindungsachse für die beiden hinteren Räder 25 bildet. An dieser Verbindungsachse können die Adapter 5 ebenfalls befestigt sein. Im Ausführungsbeispiel sind die Adapter 5 so angeordnet, dass der Querbolzen 8, 9, an dem die Enden der Befestigungsarme 4 befestigt werden müssen, unterhalb des Querholmes 30 liegen. Auch diese Ausführung zeigt, dass durch entsprechende Winkelverstellung der ersten Befestigungsarmteile 4a eine Anbindung durch Einhaken möglich ist. Die Haken an den freien Enden der zweiten Befestigungsarmteile 4b werden innerhalb der Kammer des Adapters 5 auf den Querbolzen 8, 9 aufgehakt und können, wie auch aus Fig. 1 und 2 ersichtlich, über die Schiebesicherung hieran sicher gehalten werden. Auch durch diese Anordnung ist eine vertikale Schwingung der Befestigungsarme möglich.

Fig. 4 zeigt, abweichend von Fig. 3, dass der Adapter 5 aber auch umgekehrt angeschraubt sein kann, nämlich über seine Spannschrauben 17, so dass der Querbolzen am Adapter 5 obenseitig oberhalb des Querholmes als Anbindungsträger für die Befestigungsarme 4 in Betracht kommt. Die beiden Abbildungen zeigen ferner, dass die Anordnung in diesen Fällen bei gerader Ausrichtung der zweiten Befestigungsarmteile 4b parallel zur Längsachse des Wagengestells an dem Querbolzen 9 möglich ist.

Fig. 6 zeigt ein weiteres Ausführungsbeispiel, bei dem eine Ankopplung an ein Buggygestell erfolgt. Die Adapter 5 sind dabei quer verlaufend aufeinander zu gerichtet an den Stützen befestigt. Die Adapter 5 weisen obenseitig längs ausgerichtete Bolzen auf, an denen die hakenförmigen Enden der zweiten Befestigungsarmteile 4b schwenkbeweglich aufgesetzt sind. Auch hier ist eine Sicherung durch eine Schiebesicherung 26 vorgesehen, um ein unbeabsichtigtes Abziehen zu vermeiden. Im Übrigen weisen die Befestigungsarme 4 die gleiche Struktur auf wie die zuvor beschriebenen, so dass eine Ausrichtung an die Breite des Wagengestells bzw. den beabstandet vorgesehenen Adaptern möglich ist. Ferner ist durch die Erfindung, gerade bei einem Buggyfahrgestell, auch gewährleistet, dass nach dem Lösen der Schrauben 12 bei Anbindung eines Stehbrettes nach der Erfindung ein Zusammenklappen des Wagengestells ermöglicht wird, da dann die Befestigungsarmteile 4b verschwenken können.

In Fig. 5 ist ein Adapter nach der Erfindung in einer Ausführungsform in einer perspektivischen Explosionszeichnung dargestellt. Der Adapter 5 besteht aus zwei Seitenwänden 16a, 16b, die über eine Querwand miteinander verbunden sind. Der Adapter 5 ist als Formteil aus Kunststoff gefertigt, ebenso der darin eingesetzte Spannkörper 15. Die beiden Seitenwände 16a, 16b sind mit einer Reihe von Rippen 24 versehen, die parallel verlaufend gegenüberstehend angeordnet sind. Diese Rippen 24 sind, wie aus der Zeichnung ersichtlich ist, T-förmige Rippen, so dass nach innen Abzugssicherungen bzw. Führungen gegeben sind, die ein Aufweiten der U-förmigen Aufnahme 13 vermeiden. Oberhalb der U-förmigen Aufnahme 13 ist ein Spannkörper 15 eingezeichnet, der ein korrespondierendes Rippenpaar 29 aufweist. Diese Rippen sind so geformt, dass sie in die Längsschlitze zwischen zwei benachbarten Rippen 24 an den Seitenwänden 16a, 16b von oben eingeschoben werden können. Dadurch ist es möglich, den Spannkörper 15 vorgezogen einzusetzen oder aber auch weiter nach hinten, wodurch die Länge der Aufnahme 13 veränderbar ist. An dem Spannkörper 15 ist ferner vorderseitig ein Spannklotz 18 vorgesehen, der von einer Spindel der Spannschraube 17 vorgeschoben werden kann. Es ist ersichtlich, dass durch Einsetzen eines Rahmenteils, z. B. der Stützen 1a, 1b, hier eine kraftflüssige Verbindung herstellbar ist, wodurch der Adapter 5 an den entsprechenden Rahmenteil fest angeklemmt wird. Zur Klemmung wird die Spannschraube 17 gedreht, wodurch der Spannklotz 15 das Rahmenteil gegen die Wandteile 14 der Zwischenwand des Adapters 5 presst. Durch Umsetzen des Spannkörpers 15 über die korrespondierenden Rippen 24, 29 ist dabei eine Voranpassung an die Größe bzw. Tiefe der Rahmenteile 1a, 1b möglich. An der vorderen Seite der Zwischenwand ist eine Lagerkammer 19 gezeichnet, in der sich ein Querbolzen 9 befindet, der im Ausführungsbeispiel als Hohlbolzen ausgebildet ist, so dass eine Durchgangsbohrung 34 gegeben ist. Die weiterhin eingezeichneten Verstärkungsrippen an den Außenseiten der oberen und unteren Wand dienen zugleich bei Anbringung eines Zwischengliedes 10 auf dieser Wand der leichteren Drehbarkeit, da die Reibkräfte nicht über die gesamte Fläche verteilt, sondern über die Rippenflächen verteilt verlaufen. Das Zwischenglied 10 kann also auf die Rippenflächen aufgesetzt an dem Hohlbolzen 9 beispielsweise durch Nieten befestigt werden. Das Zwischenglied 10 weist ferner eine gabelförmige Aufnahme auf, in die ein Querbolzen 8 eingesetzt ist, damit der hakenförmige Verbinder am Ende des Befestigungsteils im Bedarfsfall auch hierauf aufgestellt werden kann.

Dieses Zwischenglied 10 ist auch auf einfache Weise mit einem Anpassungselement 20 verbindbar, das hakenförmig ausgeführt ist und einen hakenförmigen Teil 21 aufweist, der beispielsweise auf den Querbolzen 9 aufsetzbar ist. Die Darstellung zeigt, dass bei entsprechender Montage der hakenförmige Teil 21 auf den Bolzen 9, der hier vertikal verläuft, aufsetzbar ist und dass das ankoppelbare Zwischenglied 10 in der dargestellten Position angebracht sein kann, in der der Bolzen 8 horizontal verläuft, was gewünscht ist. Um eine einfache Rastverbindung zu ermöglichen, ist an der Unterseite des Anpassungselementes 20 eine Lagerscheibe 22 vorstehend vorgesehen, die in eine U-förmige Lageraufnehmung 23 im Zwischenglied 10 von oben einsetzbar ist. Sofern keine rückzugssichernden Rasten vorgesehen sind, kann auch eine Niet- oder Schraubverbindung über die Anformung 27 und dem mittigen Loch sowie dem Loch 28 in der Lagerscheibe 22 mittels Niet oder Schraube hergestellt werden. In jedem Fall ist eine relative Verdrehung um die Längsachse möglich, so dass eine Ausrichtung des Bolzens 8 in gewünschter Weise vorgenommen werden kann, um ein horizontales Einhängen des hakenförmigen Abschlusselementes an dem Befestigungsarmteil 4b zu ermöglichen. Der Adapter 5 kann auch anders ausgebildet sein. So braucht er beispielsweise keine dreiseitig umschlossene Lagerkammer 19 aufzuweisen, es kann auch der Bolzen 9 direkt die beiden Wandteile verbinden.

**Bezugszeichen**
- 1a: Rahmenteil
- 1b: Rahmenteil
- 2: horizontale Achse
- 3: Stehbrett
- 4: Befestigungsarm
- 4a: Befestigungsarmteil
- 4b: Befestigungsarmteil
- 5: Adapter
- 6: horizontale Achse
- 7: Schwenklager
- 8: Bolzen
- 9: Bolzen
- 10: Zwischenglied
- 11: Transportrolle
- 12: Schraube
- 13: U-förmige Aufnahme
- 14: Wandteile
- 15: Spannkörper
- 16a: Seitenwand
- 16b: Seitenwand

- 17: Spannschraube
- 18: Spannklotz
- 19: Lagerkammer
- 20: Anpassungselement
- 21: hakenförmiger Teil
- 22: Lagerscheibe
- 23: Lagerausnehmung
- 24: Rippen
- 25: Rand
- 26: Schiebesicherung
- 27: Anformung
- 28: Bohrung
- 29: Rippen
- 30: Querholm
- 31: Feststellschraube
- 32: Gabelanordnung
- 33: vertikale Schwenkachse
- 34: Durchgangsbohrung

## Patentansprüche

1. Stehbrett für Buggys, Kinder- und/oder Einkaufswagen, befestigbar an Rahmenteilen (1a, 1b) des Wagengestells mittels zweier beabstandet voneinander an der dem Wagengestell zugewandten Seite am Stehbrett (3) um eine erste horizontale Achse (2) im Winkel verstellbare angeordnete Befestigungsarme (4) aus zwei relativ zueinander verstellbaren Teilen (4a, 4b), die sich mindestens nach vorne in das Wagengestell erstrecken und mit den freien Enden jeweils an einem Adapter (5) um eine zweite horizontale Achse (6) schwenkbar befestigt sind, welcher Adapter an einem Rahmenteil (1a, 1b) des Wagengestells fixierbar ist, wobei das Stehbrett im hinteren Bereich mindestens eine Transportrolle oder eine Radanordnung (11) aufweist, wobei der erste Befestigungsarmteil (4a) um die erste horizontale Achse (2) in verschiedene Winkel verstellbar angeordnet ist und der zweite Befestigungsarmteil (4b) mit dem freien Ende am Adapter (5) fixiert ist, **dadurch gekennzeichnet, dass** jeder zweite Befestigungsarmteil (4b) um eine quer zur ersten horizontalen Achse (2) verlaufende Achse (7) relativ gegenüber dem ersten Befestigungsarmteil (4a) verschwenkbar und in den Schwenkstellungen arretierbar an dem ersten Befestigungsarmteil (4a) gelagert ist.

2. Stehbrett nach Anspruch 1, **dadurch gekennzeichnet, dass** an dem zweiten Befestigungsarmteil (4b) ein hakenförmiges Befestigungsmittel zur schwenkbeweglichen Fixierung an dem Adapter (5) vorgesehen ist, das auf einen quer hierzu verlaufenden Bolzen (8, 9) oder Bügel an dem Adapter (5) oder an einem am Adapter befestigbaren Zwischenglied (10) einhängbar ist.

3. Stehbrett nach Anspruch 1, **dadurch gekennzeichnet, dass** der erste Befestigungsarmteil (4a) einen Lagerabschnitt und einen hierzu in einem bestimmten Winkel nach oben verlaufenden zweiten Abschnitt aufweist, an dem sich das Schwenklager (7) für den zweiten Befestigungsarmteil (4b) befindet.

4. Stehbrett nach Anspruch 1, **dadurch gekennzeichnet, dass** der zweite Befestigungsarmteil (4b) am Schwenklager (7) am ersten Befestigungsarmteil (4a) mittels Schrauben (12) oder Rastgesperre oder Rastkupplung in den verschiedenen Schwenkstellungen feststellbar ist.

5. Stehbrett nach Anspruch 1, **dadurch gekennzeichnet,**
- **dass** der Adapter (5) aus einer U-förmigen Aufnahme (13) zum Aufschieben auf Rahmenteile (1a, 1b) des Wagengestells, einem Holm oder einer Stütze besteht,
- **dass** die U-förmige Aufnahme (13) einen gebogenen Boden oder V-förmig zulaufende Wandteile (14) mit Gegendruckflächen aufweist, an denen die Rahmenteile (1a, 1b), die Stütze oder der Holm anliegen,
- **dass** ein Spannkörper (15) hinter dem Rahmenteil (1a, 1b) in die U-förmige Aufnahme (13) einsetzbar und an den Seitenwänden (16a, 16b) geführt gehalten ist,
- **dass** der Spannkörper (15) einen mittels Spannschraube (17) verschiebbaren Spannklotz (18) aufweist, der gegen das Rahmenteil (1a, 1b) durch Betätigen einer Spannschraube (17) drückt und den Adapter (5) in gewünschter Weise festhält, und
- **dass** der Adapter (5) auf der anderen Seite der Wandteile (14) einen Querbolzen (9) in einer Lagerkammer (19) oder an einem der Adapter (5) einen seitlich fixierten Bügel aufweist, auf den der Befestigungshaken am zweiten Befestigungsarmteil (4b) direkt einhängbar ist.

6. Stehbrett nach Anspruch 5, **dadurch gekennzeichnet, dass** auf den Querbolzen (9) ein Anpassungselement (20) mit einem hakenförmigen Teil (21) einhängbar ist, der gegenüber dem Zwischenglied (10) mit Querbolzen (8) derart um die Längsachse schwenkbeweglich befestigt ist, dass eine horizontale Ausrichtung des Querbolzens (8) bei unterschiedlicher Lage des Adapters möglich ist.

7. Stehbrett nach Anspruch 5 oder 6, **dadurch gekennzeichnet, dass** der Querbolzen (9) in einer Lagerkammer (19) vorgesehen ist, welche Lagerkammer (19) derart ausgeformt ist, dass der Haken am zweiten Befestigungsteil (4b) oder am Anpassungselement (20) um einen definierten Winkel verschwenkbar ist.

8. Stehbrett nach Anspruch 6, **dadurch gekennzeichnet, dass** das Anpassungselement (20) eine Lagerscheibe (22) aufweist, die in eine Lagerausnehmung (23) an dem Zwischenglied (10) einsetzbar ist.

9. Stehbrett nach Anspruch 5, **dadurch gekennzeichnet, dass** mehrere parallele erste Rippen (24) in den Seitenwänden (16a, 16b) der U-förmigen Aufnahme quer zur Längsachse des Adapters (5) verlaufend vorgesehen sind und dass hiermit korrespondierend an den Seiten des Spannkörpers (15) vorgesehene zweite Rippen (29) beim Einsetzen desselben in die Aufnahme (13) eingreifen, wobei diese in der Tiefe versetzbar sind.

10. Stehbrett nach Anspruch 9, **dadurch gekennzeichnet, dass** in Einschubrichtung des Spannkörpers (15) in die Aufnahme (13) eine Verrastung vorgesehen ist.

11. Stehbrett nach Anspruch 1, **dadurch gekennzeichnet, dass** der zweite Befestigungsarmteil (4b) als Wechselbefestigungsarmteil ausgeführt ist und gegen einen kürzeren oder längeren Befestigungsarmteil (4b) austauschbar ist oder dass der zweite Befestigungsarmteil als Teleskoparmteil ausgeführt ist und aus mindestens zwei Teilen besteht, die ineinander einschiebbar oder aneinander liegend relativ zueinander verschiebbar sind.

12. Stehbrett nach einem der vorhergehenden Ansprüche, **dadurch gekennzeichnet, dass** das Stehbrett (3) und/oder die Befestigungsarme und/oder die Adapter aus Kunststoff bestehen.

13. Stehbrett nach Anspruch 1, **dadurch gekennzeichnet, dass** der Querbolzen oder der Bügel aus Kunststoff oder aus Metall besteht.

14. Stehbrett nach Anspruch 2, **dadurch gekennzeichnet, dass** an dem zweiten Befestigungsarmteil (4b) eine Schiebesicherung über den Bolzen (8, 9) oder den Bügel im eingesetzten Zustand schiebbar ist.

15. Stehbrett nach Anspruch 14, **dadurch gekennzeichnet, dass** die Schiebesicherung ein federbelasteter Schieberiegel ist, der durch die Kraft einer Feder die Einführöffnung des Hakens verdeckt, und dass an dem Schieberiegel stirnseitig und/oder an dem Haken eine solche Einführschräge angeformt ist, dass der Bolzen beim Gegengreifen den Schieberiegel verdrängt und dieser nach dem Überlaufen des Bolzens (8, 9) die Einführöffnung wieder verschließt.

## Claims

1. Stand board for buggies, pushchairs and/or shopping trolleys, fastenable to frame parts (1 a, 1 b) of the carriage frame by means of two mutually spaced-apart fastening arms (4), which are arranged at the stand board (3) at the side facing the carriage frame to be angularly adjustable about a first horizontal axis (2) and which consist of two parts (4a, 4b) which are adjustable relative to one another and extend at least forwardly in the carriage frame and are fastened by the free ends to respective adapters (5) to be pivotable about a second horizontal axis (6), each adapter being fixable to a frame part (1a, 1b) of the carriage frame, wherein the stand board has in the rearward region at least one transport roller or wheel arrangement (11) and wherein the first fastening arm part (4a) is arranged to be adjustable about the first horizontal axis (2) into different angles and the second fastening arm part (4b) is fixed by the free end to the adapter (5), **characterised in that** each second fastening arm part (4b) is mounted to be pivotable relative to the first fastening arm part (4a) about an axis (7) extending transversely to the first horizontal axis (2) and to be lockable to the first fastening arm part (4a) in the pivot settings.

2. Stand board according to claim 1, **characterised in that** a hook-shaped fastening means for pivotably movable fixing to the adapter (5) is provided at the second fastening arm part (4b), which fastening means can be hung on a pin (8, 9) or bracket, which extends transversely to the adapter, at the adapter (5) or at an intermediate element (10) fastenable to the adapter.

3. Stand board according to claim 1, **characterised in that** the first fastening arm part (4a) has a mounting section and a second section which extends upwardly at a defined angle thereto and at which the pivot bearing (7) for the second fastening arm part (4b) is disposed.

4. Stand board according to claim 1, **characterised in that** the second fastening arm part (4b) is fixable to the pivot bearing (7) at the first fastening arm part (4a) in the different pivot settings by means of screws (12) or a detent lock or detent coupling.

5. Stand board according to claim 1, **characterised in that**
- the adapter (5) consists of a U-shaped mount (13) for the pushing on of frame parts (1a, 1 b) of the carriage frame, a spar or a support,
- the U-shaped mount (13) has a curved base or wall parts (14) tapering in V-shape with counter-pressure surfaces against which the frame parts (1 a, 1 b), the support or the spar bear or bears,
- a clamping body (15) is insertable behind the frame part (1a, 1b) into the U-shaped mount (13) and is held with guidance at the side walls (16a, 16b),
- the clamping body (15) has a clamping block (18) which is displaceable by means of a clamping screw (17) and which presses against the frame part (1a, 1b) by actuation of the clamping screw (17) and fixes the adapter (5) in desired manner and
- the adapter (5) has on the other side of the wall parts (14) a transverse pin (9) in a bearing chamber (19) or at one of the adapters (5) a laterally fixed bracket on which the fastening hook at the second fastening arm part (4b) can be directly hung.

6. Stand board according to claim 5, **characterised in that** an adapter element (20) with a hook-shaped part (21) can be hung on the transverse pin (9), which part is fastened by transverse pins (8) to be so pivotably movable relative to the intermediate element (10) about the longitudinal axis that a horizontal alignment of the transverse pin (8) is possible in different positions of the adapter.

7. Stand board according to claim 5 or 6, **characterised in that** the transverse pin (9) is provided in a bearing chamber (19) which is formed in such a manner that the hook at the second fastening part (4b) or at the adapter element (20) is pivotable through a defined angle.

8. Stand board according to claim 6, **characterised in that** the adapter element (20) comprises a bearing washer (22) insertable into a bearing recess (23) at the intermediate element (10).

9. Stand board according to claim 5, **characterised in that** several parallel first ribs (24) are provided in the side walls (16a, 16b) of the U-shaped mount to extend transversely to the longitudinal axis of the adapter (5) and that second ribs (29) corresponding therewith and provided at the sides of the clamping body (15) engage on insertion of the same in the mount (13), wherein these are displaceable in depth.

10. Stand board according to claim 9, **characterised in that** a detenting in the mount (13) is provided in the push-in direction of the clamping body (15).

11. Stand board according to claim 1, **characterised in that** the second fastening arm part (4b) is constructed as an exchange fastening arm part and is exchangeable for a shorter or a longer fastening arm part (4b) or that the second fastening arm part is constructed as a telescopic arm part and consists of at least two parts which can be pushed into one another or, lying against one another, can be displaced relative to one another.

12. Stand board according to any one of the preceding claims, **characterised in that** the stand board (3) and/or the fastening arms and/or the adapter consists or consist of plastics material.

13. Stand board according to claim 1, **characterised in that** the transverse pin or the bracket consists of plastics material or metal.

14. Stand board according to claim 2, **characterised in that** a displacement securing means at the second fastening arm part (4b) is pushable over the pin (8, 9) or the bracket in the inserted state.

15. Stand board according to claim 14, **characterised in that** the displacement securing means is a spring-loaded displacement latch which through the force of the spring covers the introduction opening of the hook and that formed at the displacement latch at the end face and/or at the hook is such an introduction chamfer that the pin on mutual engagement displaces the displacement latch and this closes the introduction opening again after running past the pin (8, 9).

## Revendications

1. Planche d'immobilisation pour poussettes-cannes, poussettes et/ou chariots de supermarché, fixable sur les parties du cadre (1a, 1b) de l'armature du véhicule sur deux points éloignés l'un de l'autre sur le côté de la planche d'immobilisation (3) orientée vers l'armature autour d'un premier axe horizontal (2) dans l'angle d'un bras de fixation (4) réglable fait de deux pièces (4a, 4b) relativement réglables qui s'étendent au moins vers l'avant dans l'armature et sont fixées aux deux extrémités libres de façon à basculer respectivement à un adaptateur (5) autour d'un second axe horizontal (6), lequel adaptateur est fixable à une pièce du cadre (1a, 1b) de l'armature du véhicule, la planche d'immobilisation présentant dans sa partie arrière au moins une roulette de transport ou un ensemble de roues (11), **caractérisée en ce**la que chaque seconde partie du bras de fixation (4b) peut être basculée autour d'un axe (7) passant en travers du premier axe horizontal (2) relativement en face de la première partie du bras de fixation (4a) et pouvant être arrêtée dans la positions de bascule sur lesquels la première partie du bras de fixation (4a) est situé. La première partie du bras de fixation (4a) étant placé de façon à être réglé autour du premier axe horizontal (2) selon différents angles et la seconde partie du bras de fixation (4b) est fixée par son extrémité libre à l'adaptateur (5).

2. Planche d'immobilisation selon la revendication 1, **caractérisée en ce**la que sur la seconde partie du bras de fixation (4b) un moyen de fixation en forme de crochet est prévu pour une fixation avec mouvement de bascule sur l'adaptateur (5) qui peut être accroché par une cheville (8, 9) passant en travers ou par un étrier sur l'adaptateur (5) ou à une pièce intermédiaire (10) fixable sur l'adaptateur.

3. Planche d'immobilisation selon la revendication 1 **caractérisée en ce**la que la première partie du bras de fixation (4a) présente une section de roulement et une section orientée vers le haut selon un angle particulier sur laquelle le roulement à bascule (7) pour la seconde partie du bras de fixation (4b) se trouve.

4. Planche d'immobilisation selon la revendication 1 **caractérisée en ce**la que la seconde partie du bras de fixation (4b) peut être fixée sur le roulement à bascule (7) de la première partie du bras de fixation (4a) avec des vis (12) ou un cran d'arrêt ou un couplage d'arrêt dans les différentes positions de bascule.

5. Planche d'immobilisation selon la revendication 1 **caractérisée en ce**la,
- que l'adaptateur (5) est composé d'un guide en forme de U (13) passant sur les pièces du cadre (1a, 1b) de l'armature du chariot, d'une traverse ou d'un appui,
- que le guide en forme de U (13) présente un arc courbé ou des pièces de paroi en forme de V (14) avec des surfaces de contrepression sur lesquelles les pièces du cadre (1a, 1b), l'appui ou la traverse se trouve,
- qu'un corps de tension (15) est utilisable derrière la pièce du cadre (1a, 1b) dans le guide en forme de U (13) et est conduit sur les parois latérales (16a, 16b),
- que le corps de tension (15) présente un bloc de tension (18) pouvant être déplacé avec un tendeur (17) qui appuie contre la pièce du cadre (1a, 1b) en actionnant un tendeur (17) et qui maintient l'adaptateur (5) dans la position de son choix et
- que l'adaptateur (5) présente sur l'autre côté des pièces de parois (14) un boulon transversal (9) dans une chambre de roulement (19) ou un étrier fixé latéralement sur l'un des adaptateurs (5) et dont le crochet de fixation peut être directement accroché sur la seconde partie du bras de fixation (4b).

6. Planche d'immobilisation selon la revendication 5 **caractérisée en ce**la que sur le boulon transversal (9) un élément d'ajustement (20) peut être accroché avec une pièce en forme de crochet (21) qui est fixé de façon à basculer en face de la partie intermédiaire (10) avec le boulon transversal (8) de telle sorte qu'une orientation horizontale du boulon transversal (8) est possible avec une position différente de l'adaptateur.

7. Planche d'immobilisation selon la revendication 5 ou **caractérisée en ce**la que le boulon transversal (9) est prévu dans une chambre de roulement (19), laquelle chambre de roulement (19) est formée de telle sorte que le crochet peut être basculé sur la seconde partie du bras de fixation (4b) ou sur l'élément d'ajustement (20) selon un angle défini.

8. Planche d'immobilisation selon la revendication 6 **caractérisée en ce**la que l'élément d'ajustement (20) présente un disque de roulement (22) qui est utilisable dans une entaille (23) sur la partie intermédiaire (10).

9. Planche d'immobilisation selon la revendication 5 **caractérisée en ce**la que des premières nervures (24) parallèles sont prévues dans les parois latérales (16a, 16b) du guide en forme de U en travers de l'axe longitudinal de l'adaptateur (5) et qu'ainsi les secondes nervures (29) prévues correspondant aux côtés du corps de tension (15) interviennent dans le guide (13) lorsque le corps de tension est utilisé et qui sont réglables en profondeur.

10. Planche d'immobilisation selon la revendication 9 **caractérisée en ce**la que dans la direction d'avance du corps de tension (15) dans le guide (13) un enclenchement est prévu.

11. Planche d'immobilisation selon la revendication 1 **caractérisée en ce**la que la seconde partie du bras de fixation (4b) est réalisée en tant que partie de rechange du bras de fixation et peut être échangée contre une partie du bras de fixation (4b) plus courte ou plus longue ou que la seconde partie du bras de fixation est réalisée come un bras télescopique et est composée d'au moins deux parties qui peuvent être insérées l'une dans l'autre ou peuvent être déplacées l'une contre l'autre relativement proche.

12. Planche d'immobilisation selon l'une des revendications précédentes **caractérisée en ce**la que la planche d'immobilisation (3) et/ou les bras de fixation et/ou les adaptateurs sont en plastique.

13. Planche d'immobilisation selon la revendication 1 **caractérisée en ce**la que le boulon transversal ou l'étrier est en plastique ou en métal.

14. Planche d'immobilisation selon la revendication 2 **caractérisée en ce**la que sur la seconde partie du bras de fixation (4b) une sécurité de déplacement peut se déplacée au-dessus du boulon (8,9) ou au-dessus de l'étrier utilisé.

15. Planche d'immobilisation selon la revendication 14 **caractérisée en ce**la que la sécurité de déplacement est un verrouillage avec ressort qui couvre par la force du ressort l'entrée d'introduction du crochet et qu'un biseau d'introduction est formé sur le verrouillage sur le côté avant et/ou sur le crochet que le boulon repousse le verrouillage et qui referme l'ouverture d'introduction lorsque le boulon (8,9) passe au-dessus.
